# EUROPEAN PATENT SPECIFICATION

(11) **EP 1 816 780 B1**
(45) Date of publication and mention of the grant of the patent: **06.08.2008**
(21) Application number: 06101264.7
(22) Date of filing: 03.02.2006
(51) Int. Cl.: H04L 5/14, H04L 25/08

(54) **Method and device for simultaneous bi-directional transmission of serial data**
Verfahren und Vorrichtung für gleichzeitige, bidirektionelle serielle Datenübertragung
Méthode et appareil pour la transmission bidirectionelle simultanée de données sérielles

(43) Date of publication of application: 08.08.2007
(73) Proprietor: INOVA Semiconductors GmbH, 81671 München (DE)
(72) Inventor: Riedel, Michael, 81671 Munich (DE); Neumann, Roland, 81671 Munich (DE)
(74) Representative: Winter, Brandl, Fürniss, Hübner Röss, Kaiser, Polte Partnerschaft Patent- und Rechtsanwaltskanzlei

(56) References cited:
- US-A- 5 485 488
- US-B1- 6 813 483

## Description

The present invention relates to a method and a device for bi-directional and simultaneous transmission of serial data according to the preambles of claims 1 and 5, respectively.

### Background art

In transmission of serial data it would be of advantage to provide the ability to perform bi-directional transmission of serial signals simultaneously. If serial signals are transmitted differentially via a differential amplifier in general two wires are necessary to transmit the serial signals in one direction. Thus, if serial signals have to be transmitted in both directions simultaneously there is the necessity to provide additional wires and additional means necessary for transmission. Thus, costs are increased and configuration is complicated.

In order to avoid these disadvantages there is the possibility to use two wires alternatively for both directions. However, this strongly reduces the bandwidth of the transmission channel for each direction.

A method and a device according to the preambles of claims 1 and 5, respectively are known from of US 5 485 488.

A method and a device which use differential transmitting and transmitting by means of a common mode jump in the same direction are known from US 6 813 483.

### Disclosure of the invention

It is therefore the object of the present invention to provide a method and a device for bi-directional transmission of serial data using a simple structure and avoiding increasing costs.

This object is solved by the subject matter of claims 1 and 5.

Further advantageous modifications are subject matter of the dependent claims.

### Brief Description of Drawings

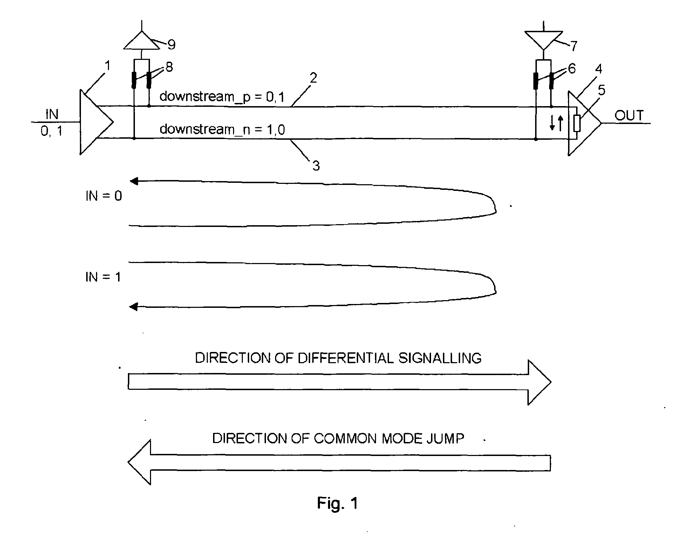

Fig. 1 shows a device for simultaneous bi-directional transmission of serial data according to an embodiment of the present invention.

### Best mode for carrying out the invention

In the following an embodiment of the present invention will be described.

Fig. 1 shows a device for simultaneous bi-directional transmission of serial data according to the embodiment of the present invention.

As shown in Fig. 1 the device comprises a first differential amplifier 1, a first wire 2, a second wire 3, a second differential amplifier 4 having a predetermined internal resistance 5, first inductances 6, a first driver amplifier 7. second inductances 8 and a second driver amplifier 9. A non-inverting output of the first differential amplifier 1 is connected to a non-inverting input of the second differential amplifier 4 via the first wire 2 and an inverting output of the first differential amplifier 1 is connected to an inverting input of the second differential amplifier 4 via the second wire 3.

The first inductances 6 are connected with the non-inverting input of the second differential amplifier 4 and with the inverting input of the second differential amplifier 4, respectively. Furthermore, the first inductances 6 are connected in parallel such that the ends of the first inductances 6 which are not connected with a respective input of the second differential amplifier 4 are connected with each other. The second inductances 8 are connected with the non-inverting output of the first differential amplifier 1 and with the inverting output of the first differential amplifier 1, respectively. Furthermore, the second inductances 8 are connected in parallel such that the ends of the second inductances 8 which are not connected with a respective output of the first differential amplifier 1 are connected with each other. To the ends of the first inductances 6 which are connected with each other there is connected the output of the first driver amplifier 7 and to the ends of the second inductances 8 which are connected with each other there is connected the input of the second driver amplifier 9.

Now, a method of differential signalling used by the device of the embodiment of the present invention will be described in further detail. It has to be noted that in the following description a logical state "true" of a signal "name" is represented by differential signals "name_p = 1" and "name_n = 0" and a logical state "false" of the signal "name" is represented by differential signals "name_p = 0" and name_n = 1 ". Furthermore, a logical state "true" of the signal "name is represented by a signal "name = 1" and a logical state "false" of the signal "name " is represented by a signal "name = 0". Here, "name" is a wild-card for an arbitrary name of a signal.

An input signal IN is inputted in an input of the first differential amplifier 1. The input signal IN is transmitted to the non-inverting input of the second differential amplifier 4 via the first wire 2 and an inverted input signal -IN is transmitted to the inverting input of the second differential amplifier 4 via the second wire 3. A differential signal of these two signals IN and -IN is an output signal OUT of the second differential amplifier 4. As shown in Fig. 1, if it is assumed that IN is 0, then a first signal downstream_p = 0 is transmitted to the non-inverting input of the second differential amplifier 4 via the first wire 2 and a second signal downstream_n = 1 is transmitted to the inverting input of the second differential amplifier 4 via the second wire 3. Contrary, if it is assumed that IN is 1, then a first signal downstream_p = 1 is transmitted to the non-inverting input of the second differential amplifier 4 via the first wire 2 and a second signal downstream_n = 0 is transmitted to the inverting input of the second differential amplifier 4 via the second wire 3.

This means that the first wire 2 and the second wire 3 always transmit a first signal downstream_p and a second signal downstream_n with are complementary to each other. As is further shown in Fig. 1 by the upper loop with arrow if the input signal IN = 0 current flows in a direction from the inverting output of the first differential amplifier 1 to the non-inverting output of the first differential amplifier 1 via the internal resistance 5 of the second differential amplifier 4. As is further shown in Fig. 1 by the lower loop with arrow if the input signal IN = 1 current flows from the non-inverting output of the first differential amplifier 2 to the inverting output of the first differential amplifier 1 via the internal resistance 5 of the second differential amplifier 4.

It is assumed in the following description that a signal 0 corresponds to a voltage of for example 0V and a signal 1 corresponds to a voltage of for example 3,3V to explain the output behaviour of the device of the embodiment of the present invention.

The output signal OUT of the second differential amplifier is given by the equation OUT = downstream_p - downstream_n, where the voltage values for the signals must be used. Therefore, in the case the input signal IN has a state of 1 the output signal OUT = 0 - 3,3V = -3,3V and in the case the input signal IN has a state of 0 the output signal OUT = 3,3V - 0 = 3,3V. Thus, the output signal OUT has the same amplitude in both cases but a different polarity and therefore, the logical state of the input signal IN can be determined from the polarity of the output signal OUT. Consequently, appropriate differential signalling in a downstream direction from the first differential amplifier 1 to the second differential amplifier 4, i.e. in the direction of the upper broad arrow in Fig. 1, can be achieved. The differential signalling can have a high bandwidth up to for example 1 Gbit/s. In a practical application such differential signalling can be used to transmit serial data signals. However, in general it is possible to transmit any kind of serial signals using differential signalling.

Now, a method using a common mode jump used by the device of the embodiment of the present invention will be described in further detail.

As is obvious from Fig. 1, if a predetermined signal such as a voltage Vcc is applied to the first wire 2 and the second wire 3 via the first driver amplifier 7 and the first inductances 6 the operating point OP of the second differential amplifier 5 is shifted by the amplitude of the voltage Vcc which can be expressed by "upstream = OP + Vcc". This state is defined as a logical state of 1 while the state of "upstream = OP" without the voltage Vcc is defined as a logical state of 0. Thus, in the direction of the lower broad arrow in Fig 1, i.e. an upstream direction from the second differential amplifier 4 to the first differential amplifier 1, the two logical states of 1 and 0 of the signal "upstream" can be easily detected and differentiated using the second inductances 8 and the second driver amplifier 9 as an output path to for example a Schmitt trigger, a window comparator, a level shifter or the like due to two different levels of Vcc + OP and Vcc of the signal "upstream" on the first wire 2 and the second wire 3.

It has to be noted that the first inductances 6 and the second inductances 8 serve as a DC coupling whilst HF coupling is prevented because the inductive reactance of the first inductances 6 and the second inductances 8 increases theoretically to infinity if a frequency of a respective voltage increases.

Due to the fact that the voltage Vcc is applied to both, the first wire 2 and the second wire 3, and that the second differential amplifier 4 outputs an output signal OUT which is a difference of the two input signals the voltage Vcc has no influence to the downstream differential signalling because it is eliminated, i.e. for example OUT = downstream_p - downstream_n = 0 - 3,3V = -3,3V which is the same as OUT = downstream_p - downstream_n = 0 + Vcc - 3,3V -Vcc = 0 - 3,3V = -3,3V. Consequently, downstream differential signalling and upstream signalling using a common mode jump can be performed simultaneously, wherein both signalling methods use serial signals.

The signalling using a common mode jump can have a bandwidth up to for example 18 Mbit/s which is lower than the bandwidth of the differential signalling.

In a practical application such signalling using a common mode jump can be used to transmit serial control signals such as tuning signals. However, in general it is possible to transmit any kind of serial signals using a common mode jump.

As has been described above, simultaneous bi-directional transmission can be achieved without using additional wires by measures of minimal effort.

## Claims

1. Method for simultaneous bi-directional transmission of serial data, comprising the steps of:
differentially transmitting serial data in a first direction; and
simultaneously transmitting serial data in a second direction which is opposite to the first direction by means of a common mode jump,
***characterized in that***
the differential transmitting and the transmitting by means of a common mode jump are performed on the same communication line (2, 3).

2. Method according to claim 1, wherein the bandwidth in the first direction is higher than the bandwidth in the second direction.

3. Method according to claim 1 or 2, wherein data signals are transmitted in the first direction.

4. Method according to one of claims 1 to 3, wherein control signals are transmitted in the second direction.

5. Device for simultaneous bi-directional transmission of serial data, comprising:
means (1) for differentially transmitting serial data in a first direction; and
means (6, 7) for simultaneously transmitting serial data in a second direction which is opposite to the first direction by means of a common mode jump,
***characterized in that***
the differential transmitting and the transmitting by means of a common mode jump are performed on the same communication line (2, 3).

6. Device according to claim 5, wherein the bandwidth in the first direction is higher than the bandwidth in the second direction.

7. Device according to claim 5 or 6, wherein data signals are transmitted in the first direction.

8. Device according to one of claims 5 to 7, wherein control signals are transmitted in the second direction.

## Patentansprüche

1. Verfahren zum gleichzeitigen bidirektionalen Übertragen von seriellen Daten, das die Schritte aufweist:
differenzielles Übertragen von seriellen Daten in einer ersten Richtung; und
gleichzeitiges Übertragen von seriellen Daten in einer zweiten Richtung, welche zu der ersten Richtung entgegengesetzt ist, mittels eines Gleichtaktsprungs,
***dadurch gekennzeichnet, dass***
das differenzielle Übertragen und das Übertragen mittels eines Gleichtaktsprungs auf der gleichen Kommunikationsleitung (2, 3) durchgeführt werden.

2. Verfahren nach Anspruch 1, wobei die Bandbreite in der ersten Richtung höher als die Bandbreite in der zweiten Richtung ist.

3. Verfahren nach Anspruch 1 oder 2, wobei Datensignale in der ersten Richtung übertragen werden.

4. Verfahren nach einem der Ansprüche 1 bis 3, wobei Steuersignale in der zweiten Richtung übertragen werden.

5. Vorrichtung zum gleichzeitigen bidirektionalen Übertragen von seriellen Daten, die aufweist:
eine Einrichtung (1) zum differenziellen Übertragen von seriellen Daten in einer ersten Richtung; und
eine Einrichtung (6, 7) zum gleichzeitigen Übertragen von seriellen Daten in einer zweiten Richtung, welche zu der ersten Richtung entgegengesetzt ist, mittels eines Gleichtaktsprungs,
***dadurch gekennzeichnet, dass***
das differenzielle Übertragen und das Übertragen mittels eines Gleichtaktsprungs auf der gleichen Kommunikationsleitung (2, 3) durchgeführt werden.

6. Vorrichtung nach Anspruch 5, wobei die Bandbreite in der ersten Richtung höher als die Bandbreite in der zweiten Richtung ist.

7. Vorrichtung nach Anspruch 5 oder 6, wobei Datensignale in der ersten Richtung übertragen werden.

8. Vorrichtung nach einem der Ansprüche 5 bis 7, wobei Steuersignale in der zweiten Richtung übertragen werden.

## Revendications

1. Procédé de transmission bidirectionnelle simultanée de données série, comprenant les étapes consistant à :
transmettre de façon différentielle des données série dans une première direction ; et
transmettre simultanément des données série dans une seconde direction opposée à la première direction au moyen d'un saut en mode commun,
**caractérisé en ce que**
la transmission différentielle et la transmission au moyen d'un saut en mode commun sont exécutées sur la même ligne de communication (2, 3).

2. Procédé selon la revendication 1, dans lequel la bande passante dans la première direction est supérieure à la bande passante dans la seconde direction.

3. Procédé selon la revendication 1 ou 2, dans lequel des signaux de données sont transmis dans la première direction.

4. Procédé selon les revendications 1 à 3, dans lequel des signaux de commande sont transmis dans la seconde direction.

5. Dispositif de transmission bidirectionnelle simultanée de données série, comprenant : des moyens (1) pour transmettre de façon différentielle des données série dans une première direction ; et des moyens (6, 7) pour transmettre simultanément des données série dans une seconde direction opposée à la première direction au moyen d'un saut en mode commun,
**caractérisé en ce que**
la transmission différentielle et la transmission au moyen d'un saut en mode commun sont exécutées sur la même ligne de communication (2. 3).

6. Dispositif selon la revendication 5, dans lequel la bande passante dans la première direction est supérieure à la bande passante dans la seconde direction.

7. Dispositif selon la revendication 5 ou 6, dans lequel les signaux de données sont transmis dans la première direction.

8. Dispositif selon l'une des revendications 5 à 7, dans lequel les signaux de commande sont transmis dans la seconde direction.
